(19) **Europäisches Patentamt** / **European Patent Office** / **Office européen des brevets**

(11) **EP 3 794 071 B1**

(12) **EUROPEAN PATENT SPECIFICATION**

(45) Date of publication and mention
of the grant of the patent:
**26.01.2022 Bulletin 2022/04**

(21) Application number: **19724779.4**

(22) Date of filing: **14.05.2019**

(51) International Patent Classification (IPC):
**C08L 23/08** $^{(2006.01)}$  **C08F 110/02** $^{(2006.01)}$
**C08L 23/06** $^{(2006.01)}$  **C08F 2/00** $^{(2006.01)}$
**C08F 210/16** $^{(2006.01)}$

(52) Cooperative Patent Classification (CPC):
(C-Sets available)
**C08F 2/001; C08F 210/16; C08L 23/0815;**
C08L 2205/025; C08L 2308/00; C08L 2314/02
(Cont.)

(86) International application number:
**PCT/EP2019/062264**

(87) International publication number:
**WO 2019/219633 (21.11.2019 Gazette 2019/47)**

(54) **POLYETHYLENE COMPOSITION HAVING HIGH SWELL RATIO, FNCT AND IMPACT RESISTANCE**

POLYETHYLENZUSAMMENSETZUNG MIT HOHEM QUELLVERHÄLTNIS, FNCT UND SCHLAGZÄHIGKEIT

COMPOSITION DE POLYÉTHYLÈNE AYANT UN TAUX DE GONFLEMENT, FNCT ET UNE RÉSISTANCE AUX CHOCS ÉLEVÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.05.2018 EP 18171992**

(43) Date of publication of application:
**24.03.2021 Bulletin 2021/12**

(73) Proprietor: **Basell Polyolefine GmbH**
**50389 Wesseling (DE)**

(72) Inventors:
• **DOETSCH, Diana**
**55545 Bad Kreuznach (DE)**
• **MARCZINKE, Bernd Lothar**
**67354 Römerberg (DE)**
• **MEIER, Gerhardus**
**Houston, TX 77009 (US)**
• **SCHUELLER, Ulf**
**64331 Weiterstadt (DE)**

• **FIBLA, Claudio**
**2583 ER Den Haag (NL)**

(74) Representative: **LyondellBasell**
**c/o Basell Poliolefine Italia**
**Intellectual Property**
**P.le Donegani 12**
**44122 Ferrara (IT)**

(56) References cited:
**WO-A1-2014/134193    WO-A1-2014/206854**
**WO-A1-2016/206958**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**(Cont. next page)**

(52) Cooperative Patent Classification (CPC): (Cont.)

C-Sets
**C08F 210/16, C08F 2/001;**
**C08F 210/16, C08F 4/6492;**
**C08F 210/16, C08F 4/651, C08F 4/6543;**
**C08L 23/0815, C08L 23/06;**
C08F 210/16, C08F 210/14, C08F 2500/05,
C08F 2500/07, C08F 2500/09, C08F 2500/12,
C08F 2500/17

**Description**

FIELD OF THE INVENTION

The present disclosure relates to a polyethylene composition suitable for preparing various kinds of formed articles. In particular, due to its enhanced swell ratio, environmental stress cracking resistance (FNCT) and impact resistance, high-quality surface and dimension stability of final article, the present composition is suitable for making extrusion blow-molded hollow articles, such as drums and containers.

BACKGROUND OF THE INVENTION

The present polyethylene composition provides an unmatched balance of mechanical properties and processability with respect to the known polyethylene compositions for the same use, as disclosed in particular in US6201078 and WO2014/134193 A1, reporting specific combinations of structural and rheological features and deriving mechanical properties.

SUMMARY OF THE INVENTION

Thus the present disclosure provides a polyethylene composition having the following features:

1) density from 0.945 to 0.958 g/cm$^3$, preferably from 0.948 to 0.955 g/cm$^3$, determined according to ISO 1183 at 23°C;

2) ratio MIF/MI10 from 2 to 10, in particular from 4 to 8, where MIF is the melt flow index at 190°C with a load of 21.60 kg, and MI10 is the melt flow index at 190°C with a load of 10 kg, both determined according to ISO 1133;

3) $\eta_{0.02}$ from 200,000 to 800,000 Pa.s, preferably from 200,000 to 600,000 Pa.s, more preferably from 250,000 to 600,000 Pa.s, in particular from 350,000 to 600,000 Pa.s, wherein $\eta_{0.02}$ is the complex shear viscosity at an angular frequency of 0.02 rad/s, measured with dynamic oscillatory shear in a plate-plate rotational rheometer at a temperature of 190°C;

4) long-chain branching index, LCBI, equal to or lower than 0.80, preferably lower than 0.75, in particularly equal to or lower than 0.74, with preferred lower limit of 0.63 or 0.65, wherein LCBI is the ratio of the measured mean-square radius of gyration Rg, measured by GPC-MALLS, to the mean-square radius of gyration for a linear PE having the same molecular weight, at a mol. weight of 1,000,000 g/mol.;

5) ratio ($\eta_{0.02}$/1000)/ LCBI, which is between $\eta_{0.02}$ divided by 1000 and LCBI, equal to or greater than 350, preferably equal to or greater than 380.

BRIEF DESCRIPTION OF THE DRAWINGS

These and other features, aspects, and advantages of the present disclosure will become better understood with reference to the following description and appended claims, and accompanying drawing figure where:
The drawing is an illustrative embodiment of a simplified process-flow diagram of two serially connected gas-phase reactors suitable for use in accordance with various embodiments of ethylene polymerization processes disclosed herein to produce various embodiments of the polyethylene compositions disclosed herein.
It should be understood that the various embodiments are not limited to the arrangements and instrumentality shown in the drawing figure.

DETAILED DESCRIPTION OF THE INVENTION

The expression "polyethylene composition" is intended to embrace, as alternatives, both a single ethylene polymer and an ethylene polymer composition, in particular a composition of two or more ethylene polymer components, preferably with different molecular weights, such composition being also called "bimodal" or "multimodal" polymer in the relevant art.
Typically, the present polyethylene composition consists of or comprises one or more ethylene copolymers.
All the features herein defined, comprising the previously defined features 1) to 5), are referred to the said ethylene polymer or ethylene polymer composition. The addition of other components, like the additives normally employed in the art, can modify one or more of said features.

The ratio MIF/M10 provides a rheological measure of molecular weight distribution.

Another measure of the molecular weight distribution is provided by the ratio $M_w/M_n$, where $M_w$ is the weight average molecular weight and $M_n$ is the number average molecular weight, measured by GPC (Gel Permeation Chromatography), as explained in the examples.

Preferred $M_w/M_n$ values for the present polyethylene composition range from 15 to 40, in particular from 20 to 35.

The $M_w$ values are preferably from 250,000 g/mol to 800,000 g/mol, in particular from 300,000 g/mol to 700,000 g/mol.

Moreover, the present polyethylene composition has preferably at least one of the following additional features.

- Mz from 1,500,000 to 8,000,000 g/mol, preferably from 2,500,000 to 4,500,000 g/mol, most preferably from 2,500,000 to 3,500,000 g/mol;
- MIF from 0.5 to 10 g/10min., in particular from 1 to 8 g/10min.;
- comonomer content equal to or less than 2% by weight, with respect to the total weight of the composition;
- HMWcopo index from 1 to 15;

wherein the HMWcopo index is determined according to the following formula:

$$HMWcopo = (\eta_{0.02} \times t_{maxDSC})/(10^5)$$

where $\eta_{0.02}$ is the complex shear viscosity of the melt in Pa.s, measured at a temperature of 190°C, in a parallel-plate (or so-called plate-plate) rheometer under dynamic oscillatory shear mode with an applied angular frequency of 0.02 rad/s; the tmaxDSC is the time, in minutes, required to reach the maximum value of heat flow (in mW) of crystallization (time at which the maximum crystallization rate is achieved, equivalent to the t1/2 crystallization half-time) at a temperature of 124 °C under quiescent conditions, measured in isothermal mode in a differential scanning calorimetry apparatus, DSC.

- ET higher than 30, preferably higher than 40, in particular from 30 or 40 to 500;

wherein ET is calculated from:

$$ET = C_2/G^* \text{ at } \tan \delta = C_3$$

wherein:

$$G^* = [(G')^2 + (G'')^2]^{1/2};$$

$$\tan \delta = G''/G';$$

$C_2 = 10^6$ dyn/cm$^2$ and $C_3 = 1.5$
G' = storage-modulus;
G" = loss-modulus;

both G' and G" being measured with dynamic oscillatory shear in a plate-plate rotational rheometer at a temperature of 190°C;

- Mz/Mw*LCBI of lower than 10.

Preferred ranges of LCBI values are:

- from 0.63 to 0.80; or
- from 0.63 to 0.74; or
- from 0.65 to 0.80; or
- from 0.65 to 0.74.

Preferred ranges of ratio ($\eta_{0.02}$/1000)/ LCBI are:

- from 350 to 900; or
- from 350 to 800; or
- from 380 to 900; or
- from 380 to 800.

Preferred values of Mz/Mw*LCBI, which is Mz/Mw multiplied by LCBI, are equal to or lower than 6.4, in particular equal to or lower than 5.9.

Preferred ranges of Mz/Mw*LCBI are:

- from 3.2 to lower than 10; or
- from 3.2 to 6.4; or
- from 3.2 to 5.9; or
- from 3.5 to lower than 10; or
- from 3.5 to 6.4; or
- from 3.5 to 5.9.

The comonomer or comonomers present in the ethylene copolymers are generally selected from olefins having formula $CH_2=CHR$ wherein R is an alkyl radical, linear or branched, having from 1 to 10 carbon atoms.

Specific examples are propylene, butene-1, pentene-1, 4-methylpentene-1, hexene-1, octene-1 and decene-1. A particularly preferred comonomer is hexene-1.

In particular, in a preferred embodiment, the present composition comprises:

A) 30 - 70% by weight, preferably 40 - 60% by weight of an ethylene homopolymer or copolymer (the homopolymer being preferred) with density equal to or greater than 0.956 $g/cm^3$ and melt flow index MIE at 190°C with a load of 2.16 kg, according to ISO 1133-1, of 0.5 g/10 min. or higher, preferably of 1 g/10 min. or higher;

B) 30 - 70% by weight, preferably 40 - 60% by weight of an ethylene copolymer having a MIE value lower than the MIE value of A), preferably lower than 0.5 g/10 min.

The above percent amounts are given with respect to the total weight of A) + B).

Specific MIE ranges for component A) are.

- 0.5 to 10 g/10 min.; or
- 0.5 to 8 g/10 min.; or
- 1 to 10 g/10 min.; or
- 1 to 8 g/10 min.

As previously said, the present polyethylene composition can be advantageously used for producing blow molded articles, like drums, in particular L-Ring Drums (LRD) or Open Top Drums (OTD).

In fact it is preferably characterized by the following properties.

- Environmental stress crack resistance measured by FNCT 4 MPa/80°C equal to or higher than 5h, in particular from 5 to 50 h;
- Swell ratio higher than 180%, in particular higher than 190% a preferred upper limit being 220%;
- Notched Tensile Impact Atn at -30°C of 150 $kJ/m^2$ or higher, in particular of 200 $kJ/m^2$ or higher;
- Substantial absence of gels having gel diameter of higher than 700 $\mu$m.

The details of the test methods are given in the examples.

The blow-molding process is generally carried out by first plastifying the polyethylene composition in an extruder at temperatures in the range from 180 to 250°C and then extruding it through a die into a blow mold, where it is cooled.

While no necessary limitation is known to exist in principle on the kind of polymerization processes and catalysts to be used, it has been found that the present polyethylene composition can be prepared by a gas phase polymerization process in the presence of a Ziegler-Natta catalyst.

A Ziegler-Natta catalyst comprises the product of the reaction of an organometallic compound of group 1, 2 or 13 of the Periodic Table of elements with a transition metal compound of groups 4 to 10 of the Periodic Table of Elements (new notation). In particular, the transition metal compound can be selected among compounds of Ti, V, Zr, Cr and Hf and is preferably supported on $MgCl_2$.

Preferred organometallic compounds are the organo-Al compounds.

Thus in a preferred embodiment, the present polyethylene composition is obtainable by using a Ziegler-Natta polymerization catalyst, preferably a Ziegler-Natta catalyst comprising the product of reaction of:

A) a solid catalyst component comprising a Ti, Mg, chlorine and one or more internal electron donor compounds ED;
B) an organo-Al compound; and optionally
C) an external electron donor compound $ED_{ext}$.

In particular, the solid catalyst component A) comprises one internal electron donor ED selected from esters of aliphatic monocarboxylic acids (EAA) and another internal donor $ED^I$ selected from cyclic ethers (CE) in an amount such that the EAA/CE molar ratio ranges from 0.02 to less than 20.

Preferably, the EAA/CE molar ratio ranges from 0.2 to 16 and more preferably from 0.5 to 10.

The internal electron donor compound (EAA) is preferably selected from $C_1$-$C_{10}$, preferably $C_2$-$C_5$ alkyl esters of $C_2$-$C_{10}$, preferably $C_2$-$C_6$, aliphatic monocarboxylic acids. Among them, particularly preferred is ethyl acetate.

The (CE) internal donor is preferably selected from cyclic ethers having 3-5 carbon atoms and, among them, tetrahydrofuran, tetrahydropirane and dioxane are the most preferred with tetrahydrofuran being especially preferred.

The (EAA+CE)/Ti molar ratio is preferably higher than 1.5, and more preferably ranges from 2.0 to 10, especially from 2.5 to 8.

The content of (EAA) typically ranges from 1 to 30%wt with respect to the total weight of the solid catalyst component, more preferably from 2 to 20%wt. The content of (CE) typically ranges from 1 to 20%wt with respect to the total weight of the solid catalyst component, more preferably from 2 to 10%wt.

The Mg/Ti molar ratio preferably ranges from 5 to 50, more preferably from 10 to 40.

As disclosed above the catalyst component comprises, in addition to the electron donor compounds, also Ti, Mg and chlorine. The Ti atoms preferably derive from a Ti compound containing at least a Ti-halogen bond and the Mg atoms preferably derive from a magnesium dichloride. Preferred titanium compounds are the tetrahalides or the compounds of formula $TiX_n(OR^1)_{4-n}$, where $0<n<3$, X is halogen, preferably chlorine, and $R^1$ is $C_1$-$C_{10}$ hydrocarbon group. Titanium tetrachloride is the preferred titanium compound.

The catalyst component of the present disclosure can be prepared according to different methods.

One preferred method comprises the following steps: (a) contacting a $MgX_2(R^2OH)_m$ adduct in which $R^2$ groups are $C_1$-$C_{20}$ hydrocarbon groups and X is halogen, with a liquid medium comprising a Ti compound having at least a Ti-Cl bond, in an amount such that the Ti/Mg molar ratio is greater than 3, thereby forming a solid intermediate;

(b) contacting the internal donor compounds (EAA) and (CE) as previously defined with the solid intermediate product coming from (a) followed by washing the so obtained product.

Preferred starting $MgX_2(R^2OH)_m$ adducts are those in which $R^2$ groups are $C_1$-$C_{10}$ alkyl groups, X is chlorine and m is from 0.5 to 4 and more preferably from 0.5 to 2. Adducts of this type can generally be obtained by mixing alcohol and magnesium chloride in the presence of an inert hydrocarbon immiscible with the adduct, operating under stirring conditions at the melting temperature of the adduct (100-130°C). Then, the emulsion is quickly quenched, thereby causing the solidification of the adduct in form of spherical particles. Representative methods for the preparation of these spherical adducts are reported for example in USP 4,469,648, USP 4,399,054, and WO98/44009. Another useable method for the spherulization is the spray cooling described for example in USP 5,100,849 and 4,829,034.

Particularly interesting are the $MgCl_2(EtOH)_m$ adducts in which m is from 0.15 to 1.5 and particle size ranging from 10 to 100 $\mu$m obtained by subjecting the adducts with a higher alcohol content to a thermal dealcoholation process carried out in nitrogen flow at temperatures comprised between 50 and 150°C until the alcohol content is reduced to the above value. A process of this type is described in EP 395083.

The dealcoholation can also be carried out chemically by contacting the adduct with compounds capable to react with the alcohol groups.

Generally these dealcoholated adducts are also characterized by a porosity (measured by mercury method) due to pores with radius up to 1 $\mu$m ranging from 0.15 to 2.5 cm$^3$/g preferably from 0.25 to 1.5 cm$^3$/g.

The reaction with the Ti compound can be carried out by suspending the adduct in $TiCl_4$ (generally cold); subsequently the mixture is heated up to temperatures ranging from 80-130°C and kept at this temperature for 0.5-2 hours. The treatment with the titanium compound can be carried out one or more times. Preferably, it is carried out two times. At the end of the process the intermediate solid is recovered by separation of the suspension via the conventional methods (such as settling and removing of the liquid, filtration, centrifugation) and can be subject to washings with solvents. Although the washings are typically carried out with inert hydrocarbon liquids, it is also possible to use more polar solvents (having for example a higher dielectric constant) such as halogenated hydrocarbons.

As mentioned above, the intermediate solid is, in step (b) brought into contact with the internal donor compounds under conditions such as to fix on the solid an amount of donors such that the EAA/CE molar ratio ranging from 0.02 to less than 20 is fulfilled.

Although not strictly required the contact is typically carried out in a liquid medium such as a liquid hydrocarbon. The temperature at which the contact takes place can vary depending on the nature of the reagents. Generally, it is comprised in the range from -10° to 150°C and preferably from 0° to 120°C. It is clear that temperatures causing the decomposition or degradation of any specific reagents should be avoided even if they fall within the generally suitable range. Also the time of the treatment can vary in dependence of other conditions such as nature of the reagents, temperature, concentration etc. As a general indication, this contact step can last from 10 minutes to 10 hours more frequently from 0.5 to 5 hours. If desired, in order to further increase the final donor content, this step can be repeated one or more times.

At the end of this step the solid is recovered by separation of the suspension via the conventional methods (such as settling and removing of the liquid, filtration, centrifugation) and can be subject to washings with solvents. Although the washings are typically carried out with inert hydrocarbon liquids, it is also possible to use more polar solvents (having for example a higher dielectric constant) such as halogenated or oxygenated hydrocarbons.

According to a specific embodiment, it is particularly preferred that after step (b) a further step (c) is carried out subjecting the solid catalyst component coming from (b) to a thermal treatment carried out at a temperature from 70 to 150°C.

In the step (c) of the method, the solid product recovered from step (b) is subject to a thermal treatment carried out at temperatures ranging from 70 to 150°C, preferably from 80°C to 130°C, and more preferably from 85 to 100°C.

The thermal treatment can be carried out in several ways. According to one of them the solid coming from step (b) is suspended in an inert diluent like a hydrocarbon and then subject to the heating while maintaining the system under stirring.

According to an alternative technique, the solid can be heated in a dry state by inserting it in a device having jacketed heated walls. While stirring can be provided by means of mechanical stirrers placed within said device it is preferred to cause stirring to take place by using rotating devices.

According to a still different embodiment the solid coming from (b) can be heated by subjecting it to a flow of hot inert gas such as nitrogen, preferably maintaining the solid under fluidization conditions.

The heating time is not fixed but may vary depending also on the other conditions such as the maximum temperature reached. It generally ranges from 0.1 to 10 hours, more specifically from 0.5 to 6 hours. Usually, higher temperatures allow the heating time to be shorter while, on the opposite, lower temperatures may require longer reaction times.

In the process as described each of the step (b)-(c) can be carried out immediately after the previous step, without the need of isolating the solid product coming from that previous step. However, if desired the solid product coming from one step can be isolated and washed before being subject to the subsequent step.

According to a specific embodiment, a preferred modification of the process comprises subjecting the solid coming from step (a) to a prepolymerization step (a2) before carrying out step (b).

The pre-polymerization can be carried out with any of the olefins $CH_2=CHR$, where R is H or a $C_1$-$C_{10}$ hydrocarbon group. In particular, it is especially preferred to pre-polymerize ethylene or propylene or mixtures thereof with one or more $\alpha$-olefins, said mixtures containing up to 20% in moles of $\alpha$-olefin, forming amounts of polymer from about 0.1 g up to about 1000 g per gram of solid intermediate, preferably from about 0.5 to about 500 g per gram of solid intermediate, more preferably from 0.5 to 50 g per gram of solid intermediate and especially from 0.5 to 5 g per gram of solid intermediate. The pre-polymerization step can be carried out at temperatures from 0 to 80°C, preferably from 5 to 70°C, in the liquid or gas phase. The pre-polymerization of the intermediate with ethylene or propylene in order to produce an amount of polymer ranging from 0.5 to 20 g per gram of intermediate is particularly preferred. The pre-polymerization is carried out with the use of a suitable cocatalyst such as organoaluminum compounds. When the solid intermediate is prepolymerized with propylene it is especially preferred that the prepolymerization is carried out in the presence of one or more external donors preferably selected from the group consisting of silicon compounds of formula $R_a^4R_b^5Si(OR^6)_c$, where a and b are integer from 0 to 2, c is an integer from 1 to 3 and the sum (a+b+c) is 4; $R^4$, $R^5$, and $R^6$, are alkyl, cycloalkyl or aryl radicals with 1-18 carbon atoms optionally containing heteroatoms. Particularly preferred are the silicon compounds in which a is 1, b is 1, c is 2, at least one of $R^4$ and $R^5$ is selected from branched alkyl, cycloalkyl or aryl groups with 3-10 carbon atoms optionally containing heteroatoms and $R^6$ is a $C_1$-$C_{10}$ alkyl group, in particular methyl. Examples of such preferred silicon compounds are methylcyclohexyldimethoxysilane (C donor), diphenyldimethoxysilane, methyl-t-butyldimethoxysilane, dicyclopentyldimethoxysilane (D donor), diisopropyldimethoxysilane

All the above mentioned processes are suitable for the preparation of particles of solid catalyst components having substantially spherical morphology and average diameter comprised between 5 and 150 $\mu$m, preferably from 10 to 100 $\mu$m. As particles having substantially spherical morphology, those are meant wherein the ratio between the greater axis and the smaller axis is equal to, or lower than 1.5, and preferably lower than 1.3.

Generally, the solid catalyst components obtained according to the above method show a surface area (by B.E.T. method) generally between 10 and 200 $m^2$/g and preferably between 20 and 80 $m^2$/g, and a total porosity (by B.E.T. method) higher than 0.15 $cm^3$/g preferably between 0.2 and 0.6 $cm^3$/g. The porosity (Hg method) due to pores with radius up to 10.000 Å generally ranges from 0.25 to 1 $cm^3$/g, preferably from 0.35 to 0.8 $cm^3$/g.

As previously explained, the catalyst components of the disclosure whatever is the method for their preparation, form polymerization catalysts by reaction with Al-alkyl compounds. In particular Al-trialkyl compounds, for example Al-trimethyl, Al-triethyl, Al-tri-n-butyl, Al-triisobutyl are preferred. The Al/Ti ratio is higher than 1 and is generally comprised between 5 and 800.

Also alkylaluminum halides and in particular alkylaluminum chlorides such as diethylaluminum chloride (DEAC), diisobutylaluminum chloride, Al-sesquichloride and dimethylaluminum chloride (DMAC) can be used. It is also possible to use, and in certain cases preferred, mixtures of trialkylaluminum compounds with alkylaluminum halides. Among them mixtures TEAL/DEAC and TIBA/DEAC are particularly preferred.

Optionally, an external electron donor ($ED_{ext}$) can be used during polymerization. The external electron donor compound can be equal to, or different from, the internal donors used in the solid catalyst component. Preferably, it is selected from the group consisting of ethers, esters, amines, ketones, nitriles, silanes and mixtures of the above. In particular, it can advantageously be selected from the $C_2$-$C_{20}$ aliphatic ethers and especially from cyclic ethers preferably having 3-5 carbon atoms such as tetrahydrofuran and dioxane.

In addition to the aluminium alkyl cocatalyst (B) and the possible use of an external electron donor ($ED_{ext}$) as a component (C), it is possible to use a halogenated compound (D) as activity enhancer. Said compound is preferably a mono or dihalogenated hydrocarbon. In one preferred embodiment, it is chosen among monohalogenated hydrocarbons in which the halogen is linked to a secondary carbon atom. The halogen is preferably chosen among chloride and bromide.

Non-limiting exemplary compounds (D) are propylchloride, i-propylchloride, butylchloride, s-butylchloride, t-butylchloride 2-chlorobutane, cyclopentylchloride, cyclohexylchloride, 1,2-dichloroethane, 1,6-dichlorohexane, propylbromide, i-propylbromide, butylbromide, s-butylbromide, t-butylbromide, i-butylbromide i-pentylbromide, and t-pentylbromide. Among them, particularly preferred are i-propylchloride, 2-chlorobutane, cyclopentylchloride, cyclohexylchloride, 1,4-dichlorobutane and 2-bromopropane.

According to another embodiment the compounds can be chosen from among halogenated alcohols, esters or ethers such as 2,2,2,-trichloroethanol, ethyl trichloroacetate, butyl perchlorocrotonate, 2-chloro propionate and 2-chloro-tetrahydrofurane.

The activity enhancer can be used in amounts such as to have the (B)/(D) molar ratio of higher than 3 and preferably in the range 5-50 and more preferably in the range 10-40.

The above mentioned components (A)-(D) can be fed separately into the reactor where, under the polymerization conditions can exploit their activity. It constitutes however a particular advantageous embodiment the pre-contact of the above components, optionally in the presence of small amounts of olefins, for a period of time ranging from 1 minute to 10 hours, preferably in the range from 2 to 7 hours. The pre-contact can be carried out in a liquid diluent at a temperature ranging from 0 to 90°C preferably in the range of 20 to 70°C.

One or more alkyl aluminum compound or mixtures thereof can be used in the pre-contact. If more than one alkylaluminum compound is used in the pre-contact, they can be used altogether or added sequentially to the pre-contact tank. Even if the pre-contact is carried out it is not necessary to add at this stage the whole amount of aluminum alkyl compounds. A portion thereof can be added in the pre-contact while the remaining aliquot can be fed to the polymerization reactor. Moreover, when more than one aluminum alkyl compound is used, it is also possible using one or more in the precontact process and the other(s) fed to the reactor.

In one of the preferred embodiments, a precontact is carried out by first contacting the catalyst component with an aluminum trialkyl such as tri-n-hexyl aluminum (THA), then another aluminum alkyl compound, preferably, diethylaluminum chloride is added to the mixture, and finally as a third component another trialkylaluminum, preferably, triethylaluminum is added to the pre-contact mixture. According to a variant of this method, the last aluminum trialkyl is added to the polymerization reactor.

The total amount of aluminum alkyl compounds used can vary within broad ranges, but it preferably ranges from 2 to 10 mols per mole of internal donor in the solid catalyst component.

It has been found that by using the above described polymerization catalyst, the polyethylene composition of the present invention can be prepared in a process comprising the following steps, in any mutual order:

  a) polymerizing ethylene, optionally together with one or more comonomers, in a gas-phase reactor in the presence of hydrogen;
  b) copolymerizing ethylene with one or more comonomers in another gas-phase reactor in the presence of an amount of hydrogen less than step a);

where in at least one of said gas-phase reactors the growing polymer particles flow upward through a first polymerization zone (riser) under fast fluidization or transport conditions, leave said riser and enter a second polymerization zone (downcomer) through which they flow downward under the action of gravity, leave said downcomer and are reintroduced into the riser, thus establishing a circulation of polymer between said two polymerization zones.

In the first polymerization zone (riser), fast fluidization conditions are established by feeding a gas mixture comprising one or more olefins (ethylene and comonomers) at a velocity higher than the transport velocity of the polymer particles. The velocity of said gas mixture is preferably comprised between 0.5 and 15 m/s, more preferably between 0.8 and 5 m/s. The terms "transport velocity" and "fast fluidization conditions" are well known in the art; for a definition thereof, see, for example, "D. Geldart, Gas Fluidisation Technology, page 155 et seq. , J. Wiley & Sons Ltd. , 1986".

In the second polymerization zone (downcomer), the polymer particles flow under the action of gravity in a densified form, so that high values of density of the solid are reached (mass of polymer per volume of reactor), which approach the bulk density of the polymer.

In other words, the polymer flows vertically down through the downcomer in a plug flow (packed flow mode), so that only small quantities of gas are entrained between the polymer particles.

Such process allows to obtain from step a) an ethylene polymer with a molecular weight lower than the ethylene copolymer obtained from step b).

Preferably, a polymerization of ethylene to produce a relatively low molecular weight ethylene polymer (step a) is performed upstream the copolymerization of ethylene to produce a relatively high molecular weight ethylene copolymer (step b). To this aim, in step a) a gaseous mixture comprising ethylene, hydrogen, optionally comonomer and an inert gas is fed to a first gas-phase reactor, preferably a gas-phase fluidized bed reactor. The polymerization is carried out in the presence of the previously described Ziegler-Natta catalyst.

Hydrogen is fed in an amount depending on the specific catalyst used and, in any case, suitable to obtain in step a) an ethylene polymer with a melt flow index MIE of 0.5 g/10 min. or higher. In order to obtain the above MIE range, in step a) the hydrogen/ethylene molar ratio is indicatively from 0.4 to 2, the amount of ethylene monomer being from 2 to 20% by volume, preferably from 5 to15% by volume, based on the total volume of gas present in the polymerization reactor. The remaining portion of the feeding mixture is represented by inert gases and one or more comonomers, if any. Inert gases which are necessary to dissipate the heat generated by the polymerization reaction are conveniently selected from nitrogen or saturated hydrocarbons, the most preferred being propane.

The operating temperature in the reactor of step a) is selected between 50 and 120°C, preferably between 65 and 100°C, while the operating pressure is between 0.5 and 10 MPa, preferably between 2.0 and 5 MPa.

In a preferred embodiment, the ethylene polymer obtained in step a) represents from 30 to 70% by weight of the total ethylene polymer produced in the overall process, i. e. in the first and second serially connected reactors.

The ethylene polymer coming from step a) and the entrained gas are then passed through a solid/gas separation step, in order to prevent the gaseous mixture coming from the first polymerization reactor from entering the reactor of step b) (second gas-phase polymerization reactor). Said gaseous mixture can be recycled back to the first polymerization reactor, while the separated ethylene polymer is fed to the reactor of step b). A suitable point of feeding of the polymer into the second reactor is on the connecting part between the downcomer and the riser, wherein the solid concentration is particularly low, so that the flow conditions are not negatively affected.

The operating temperature in step b) is in the range of 65 to 95°C, and the pressure is in the range of 1.5 to 4.0 MPa. The second gas-phase reactor is aimed to produce a relatively high molecular weight ethylene copolymer by copolymerizing ethylene with one or more comonomers. Furthermore, in order to broaden the molecular weight distribution of the final ethylene polymer, the reactor of step b) can be conveniently operated by establishing different conditions of monomers and hydrogen concentration within the riser and the downcomer.

To this purpose, in step b) the gas mixture entraining the polymer particles and coming from the riser can be partially or totally prevented from entering the downcomer, so to obtain two different gas composition zones. This can be achieved by feeding a gas and/or a liquid mixture into the downcomer through a line placed at a suitable point of the downcomer, preferably in the upper part thereof. Said gas and/or liquid mixture should have a suitable composition, different from that of the gas mixture present in the riser. The flow of said gas and/or liquid mixture can be regulated so that an upward flow of gas counter-current to the flow of the polymer particles is generated, particularly at the top thereof, acting as a barrier to the gas mixture entrained among the polymer particles coming from the riser. In particular, it is advantageous to feed a mixture with low content of hydrogen in order to produce the higher molecular weight polymer fraction in the downcomer. One or more comonomers can be fed to the downcomer of step b), optionally together with ethylene, propane or other inert gases.

The hydrogen/ethylene molar ratio in the downcomer of step b) is comprised between 0.001 and 0.1, the ethylene concentration being comprised from 0.5 to 15%, preferably 0.5 - 10%, by volume, the comonomer concentration being comprised from 0.01 to 0.1 % by volume, based on the total volume of gas present in said downcomer. The rest is propane or similar inert gases. Since a very low molar concentration of hydrogen is present in the downcomer, by carrying out the present process it is possible to bond a relatively high amount of comonomer to the high molecular weight polyethylene fraction.

The polymer particles coming from the downcomer are reintroduced in the riser of step b).

In the riser of step b) the hydrogen/ethylene molar ratio is in the range of 0.01 to 0.5, the ethylene concentration being comprised between 5 and 20 % by volume based on the total volume of gas present in said riser.

The comonomer content is controlled in order to obtain the desired density of the final polyethylene. The concentration of said comonomer in the riser is comprised from 0.01 to 0.1 % by volume, based on the total volume of gas present in said riser.

The rest is propane or other inert gases.

More details on the above described polymerization process are provided in WO2005019280.

EXAMPLES

The practice and advantages of the various embodiments, compositions and methods as provided herein are disclosed below in the following examples. These Examples are illustrative only, and are not intended to limit the scope of the appended claims in any manner whatsoever.

The following analytical methods were used to characterize the polymer compositions.

**Density**

Determined according to ISO 1183-1:2012 at 23°C.

**Complex shear viscosity $\eta_{0.02}$ (eta (0.02)) and ET**

Measured at angular frequency of 0.02 rad/s and 190°C as follows.

Samples are melt-pressed for 4 min under 200 °C and 200 bar into plates of 1mm thickness. Disc specimens of a diameter of 25 mm are stamped and inserted in the rheometer, which is pre-heated at 190 °C. The measurement can be performed using any rotational rheometer commercially available. Here the Anton Paar MCR 300 is utilized, with a plate-plate geometry. A so-called frequency-sweep is performed (after 4 min of annealing the sample at the measurement temperature) at T = 190 °C, under constant strain-amplitude of 5%, measuring and analyzing the stress response of the material in the range of excitation frequencies $\omega$ from 628 to 0.02 rad/s. The standardized basic software is utilized to calculate the rheological properties, i.e. the storage-modulus, G', the loss-modulus, G", the phase lag $\delta$ (=arctan(G"/G')) and the complex viscosity, $\eta^*$, as a function of the applied frequency, namely $\eta^*(\omega) = [G'(\omega)^2 + G''(\omega)^2]^{1/2}/\omega$. The value of the latter at an applied frequency $\omega$ of 0.02 rad/s is the $\eta_{0.02}$.

ET is determined by the method of R. Shroff and H. Mavridis, "New Measures of Polydispersity from Rheological Data on Polymer Melts," J. Applied Polymer Science 57 (1995) 1605-1626. ET is a highly sensitivity constant to describe the polydispersity at very high molecular weight ends of the polymer and/or to describe extremely broad molecular weight distributions. The higher the ET, the rheologically broader the polymer resin.

It is calculated from:

$$ET = C_2/G^* \text{ at } \tan \delta = C_3$$

wherein:

$$G^* = [(G')^2 + (G'')^2]^{1/2};$$

$$\tan \delta = G''/G';$$

$C_2 = 10^6$ dyn/cm$^2$ and $C_3 = 1.5$.

**HMWcopo Index**

In order to quantify the crystallization and processability potential of the polymer, the HMWcopo (High Molecular Weight Copolymer) Index is used, which is defined by the following formula:

$$HMWcopo = (\eta_{0.02} \times t_{maxDSC})/(10^5)$$

It is decreasing with increasing potential of easy processing (low melt-viscosity) and fast crystallization of the polymer. It is also a description and quantification of the amount of high molecular weight fraction, correlating to the melt complex shear viscosity $\eta_{0.02}$ at the frequency of 0.02 rad/s, measured as above described, and the amount of incorporated comonomer which delays the crystallization, as quantified by the maximum heat flow time for quiescent crystallization, $t_{maxDSC}$.

The $t_{maxDSC}$ is determined using a Differential Scanning Calorimetry apparatus, TA Instruments Q2000, under isothermal conditions at a constant temperature of 124 °C. 5-6 mg of sample are weighted and brought into the aluminium DSC pans. The sample is heated with 20K/min up to 200 °C and cooled down also with 20K/min to the test temperature, in order to erase the thermal history. The isothermal test begins immediately after and the time is recorded until crystallization occurs. The time interval until the crystallization heat flow maximum (peak), $t_{maxDSC}$, is determined using the vendor software (TA Instruments). The measurement is repeated 3x times and an average value is then calculated (in min). If no crystallization is observed under these conditions for more than 120 minutes, the value of $t_{maxDSC}$ = 120 minutes is used for further calculations of the HMWcopo index.

The melt viscosity $\eta_{0.02}$ value is multiplied by the $t_{maxDSC}$ value and the product is normalized by a factor of 100000 (10^5).

## Molecular Weight Distribution Determination

The determination of the molar mass distributions and the means Mn, Mw, Mz and Mw/Mn derived therefrom was carried out by high-temperature gel permeation chromatography using a method described in ISO 16014-1, -2, -4, issues of 2003. The specifics according to the mentioned ISO standards are as follows: Solvent 1,2,4-trichlorobenzene (TCB), temperature of apparatus and solutions 135°C and as concentration detector a PolymerChar (Valencia, Paterna 46980, Spain) IR-4 infrared detector, capable for use with TCB. A WATERS Alliance 2000 equipped with the following pre-column SHODEX UT-G and separation columns SHODEX UT 806 M (3x) and SHODEX UT 807 (Showa Denko Europe GmbH, Konrad-Zuse-Platz 4, 81829 Muenchen, Germany) connected in series was used.

The solvent was vacuum distilled under Nitrogen and was stabilized with 0.025% by weight of 2,6-di-tert-butyl-4-methylphenol. The flowrate used was 1 ml/min, the injection was 500$\mu$l and polymer concentration was in the range of 0.01% < conc. < 0.05% w/w. The molecular weight calibration was established by using monodisperse polystyrene (PS) standards from Polymer Laboratories (now Agilent Technologies, Herrenberger Str. 130, 71034 Boeblingen, Germany)) in the range from 580g/mol up to 11600000g/mol and additionally with Hexadecane.

The calibration curve was then adapted to Polyethylene (PE) by means of the Universal Calibration method (Benoit H., Rempp P. and Grubisic Z., & in J. Polymer Sci., Phys. Ed., 5, 753(1967)). The Mark-Houwing parameters used herefore were for PS: $k_{PS}$= 0.000121 dl/g, $\alpha_{PS}$=0.706 and for PE $k_{PE}$= 0.000406 dl/g, $\alpha_{PE}$=0.725, valid in TCB at 135°C. Data recording, calibration and calculation was carried out using NTGPC_Control_V6.02.03 and NTGPC_V6.4.24 (hs GmbH, Hauptstraße 36, D-55437 Ober-Hilbersheim, Germany) respectively.

## Melt flow index

Determined according to ISO 1133-2:2011 at 190°C with the specified load.

## Long Chain Branching index (LCBI)

The LCB index corresponds to the branching factor g', measured for a molecular weight of $10^6$ g/mol. The branching factor g', which allows determining long-chain branches at high Mw, was measured by Gel Permeation Chromatography (GPC) coupled with Multi-Angle Laser-Light Scattering (MALLS). The radius of gyration for each fraction eluted from the GPC (as described above but with a flow-rate of 0.6 ml/min and a column packed with 30$\mu$m particles) is measured by analyzing the light scattering at the different angles with the MALLS (detector Wyatt Dawn EOS, Wyatt Technology, Santa Barbara, Calif.). A laser source of 120mW of wavelength 658nm was used. The specific index of refraction was taken as 0.104 ml/g. Data evaluation was done with Wyatt ASTRA 4.7.3 and CORONA 1.4 software. The LCB Index is determined as described in the following.

The parameter g' is the ratio of the measured mean square radius of gyration to that of a linear polymer having the same molecular weight. Linear molecules show g' of 1, while values less than 1 indicate the presence of LCB. Values of g' as a function of mol. weight, M, were calculated from the equation:

$$g'(M) = <Rg^2>_{sample,M}/<Rg^2>_{linear\ ref.,M}$$

where $<Rg^2>$, M is the root-mean-square radius of gyration for the fraction of mol. weight M.

The radius of gyration for each fraction eluted from the GPC (as described above but with a flow-rate of 0.6 ml/min and a column packed with 30$\mu$m particles) is measured by analyzing the light scattering at the different angles. Therefore, from this MALLS setup it is possible to determine mol. weight M and $<Rg^2>_{sample,M}$ and to define a g' at a measured M = $10^6$ g/mol. The $<Rg^2>_{linear\ ref.,M}$ is calculated by the established relation between radius-of-gyration and molecular weight for a linear polymer in solution (Zimm BH, Stockmayer WH, "The Dimensions of Chain Molecules Containing Branches and Rings" The Journal of Chemical Physics 17, 1301 (1949)) and confirmed by measuring a linear PE reference with the same apparatus and methodology described.

The two linear PE references IUPAC 5A and IUPAC 5B have been used for experimental validation.

The same protocol is described in the following documents.

Zimm BH, Stockmayer WH (1949) The dimensions of chain molecules containing branches and rings. J Chem Phys 17

Rubinstein M., Colby RH. (2003), Polymer Physics, Oxford University Press

## Comonomer content

The comonomer content is determined by means of IR in accordance with ASTM D 6248 98, using an FT-IR spectrometer Tensor 27 from Bruker, calibrated with a chemometric model for determining ethyl- or butyl- side-chains in PE for butene or hexene as comonomer, respectively. The result is compared to the estimated comonomer content derived from the mass-balance of the polymerization process and was found to be in agreement.

## Swell ratio

The Swell-ratio of the studied polymers is measured utilizing a capillary rheometer, Göttfert Rheotester2000 and Rheograph25, at T = 190°C, equipped with a commercial 30/2/2/20 die (total length 30 mm, Active length=2 mm, diameter = 2 mm, L/D=2/2 and 20° entrance angle) and an optical device (laser-diod from Göttfert) for measuring the extruded strand thickness. Sample is molten in the capillary barrel at190°C for 6 min and extruded with a piston velocity corresponding to a resulting shear-rate at the die of 1440 s$^{-1}$.

The extrudate is cut (by an automatic cutting device from Göttfert) at a distance of 150 mm from the die-exit, at the moment the piston reaches a position of 96 mm from the dieinlet. The extrudate diameter is measured with the laser-diod at a distance of 78 mm from the die-exit, as a function of time. The maximum value corresponds to the $D_{extrudate}$. The swell-ratio is determined from the calculation:

$$SR = (D_{extrudate}\text{-}D_{die})100\%/D_{die}$$

where $D_{die}$ is the corresponding diameter at the die exit, measured with the laserdiode.

## Notched Tensile Impact Test Atn

The tensile-impact strength is determined using ISO 8256:2004 with type 1 double notched specimens according to method A. The test specimens ($4 \times 10 \times 80$ mm) are cut from a compression molded sheet which has been prepared according ISO 1872-2 requirements (average cooling rate 15 K/min and high pressure during cooling phase). The test specimens are notched on two sides with a 45° V-notch. Depth is $2 \pm 0.1$ mm and curvature radius on notch dip is 1.0 $\pm 0.05$ mm

The free length between grips is $30 \pm 2$ mm. Before measurement, all test specimens are conditioned at a constant temperature of -30°C over a period of from 2 to 3 hours. The procedure for measurements of tensile impact strength including energy correction following method A is described in ISO 8256.

## Environmental stress cracking resistance according to full notch creep test (FNCT)

The environmental stress cracking resistance of polymer samples is determined in accordance to international standard ISO 16770 (FNCT) in aqueous surfactant solution. From the polymer sample a compression moulded 10 mm thick sheet has been prepared. The bars with squared cross section ($10\times10\times100$ mm) are notched using a razor blade on four sides perpendicularly to the stress direction. A notching device described in M. Fleissner in Kunststoffe 77 (1987), pp. 45 is used for the sharp notch with a depth of 1.6 mm.

The load applied is calculated from tensile force divided by the initial ligament area. Ligament area is the remaining area = total cross-section area of specimen minus the notch area. For FNCT specimen: $10\times10$ mm$^2$ - 4 times - of trapezoid notch area = 46.24 mm$^2$ (the remaining cross-section for the failure process / crack propagation). The test specimen is loaded with standard condition suggested by the ISO 16770 with load, in MPa, and temperature as specified in Table 1, in a 2% (by weight) water solution of non-ionic surfactant ARKOPAL N100. Time until rupture of test specimen is detected.

Example 1

Preparation of the spherical catalyst support

A magnesium chloride and alcohol adduct containing about 3 mols of alcohol was prepared following the method described in example 2 of USP 4,399,054, but working at 2000 RPM instead of 10000 RPM.
The so obtained adduct was dealcoholated up to an amount of alcohol of 25% wt via a thermal treatment, under nitrogen stream, over a temperature range of 50-150°C.

Preparation of the solid catalyst component

Into a 2 L four-necked round flask, purged with nitrogen, 1 L of $TiCl_4$ was introduced at 0°C. Then, at the same temperature, 70 g of a spherical $MgCl_2$/EtOH adduct containing 25% wt of ethanol and prepared as described above were added under stirring. The temperature was raised to 130 °C in 3 hours and maintained for 60 minutes. Then, the stirring was discontinued, the solid product was allowed to settle and the supernatant liquid was siphoned off. Fresh $TiCl_4$ was added up to 1 L total volume and the treatment at 130°C for 60 minutes was repeated. After settling and siphoning, the solid residue was then washed five times with hexane at 50°C and two times with hexane at 25 °C and dried under vacuum at 30 °C.
Into a 2 L four-necked glass reactor provided with stirrer, 812 cc of hexane at 10°C and whilst stirring 50 g of the catalyst component prepared as described above were introduced at 10°C. Keeping constant the internal temperature, 15 g of tri-n-octylaluminum (TNOA) in hexane (about 80 g/1) and an amount of cyclohexylmethyl-dimethoxysilane (CMMS) such as to have molar ratio TNOA/CMMS of 50, were slowly introduced into the reactor and the temperature was maintained to 10°C. After 10 minutes stirring, a total amount of 65 g of propylene were introduced into the reactor at the same temperature in 6.5 hours at constant rate. Then, the whole content was filtered and washed three times with hexane at a temperature of 30 °C (100 g/l). After drying the resulting pre-polymerized catalyst (A) was analyzed and found to contain 55% wt of polypropylene, 2.0% wt Ti, 9.85% wt Mg and 0.31% wt Al.
About 100 g of the solid prepolymerized catalyst prepared as described above were charged in a glass reactor purged with nitrogen and slurried with 1.0 L of heptane at 50°C.
Then, ethylacetate (EAA) and tetrahydrofuran (CE) were carefully added dropwise (in 60') in such an amount to have a molar ratio of 4 between Mg/EAA and 4 between Mg and CE.
The slurry was kept under stirring for 1.5 h still having 50°C as internal temperature. Then, the stirring was discontinued, the solid product was allowed to settle and the supernatant liquid was siphoned off. The solid was washed under stirring one time adding anhydrous heptane at 50°C up to 1 L of volume and then the stirring was discontinued, the solid product was allowed to settle and the supernatant liquid was siphoned off. Then the volume was restored to 1 L with anhydrous heptane and the temperature was raised up to 85 °C and maintained under stirring for 2 hours. Then, the stirring was discontinued, the solid product was allowed to settle and the supernatant liquid was siphoned off.
The solid was washed 3 times with anhydrous hexane (3 × 1000 mL) at 25°C, recovered, dried under vacuum and analyzed and the resulting EAA/CE molar ratio was found 0.93.

Polymerization

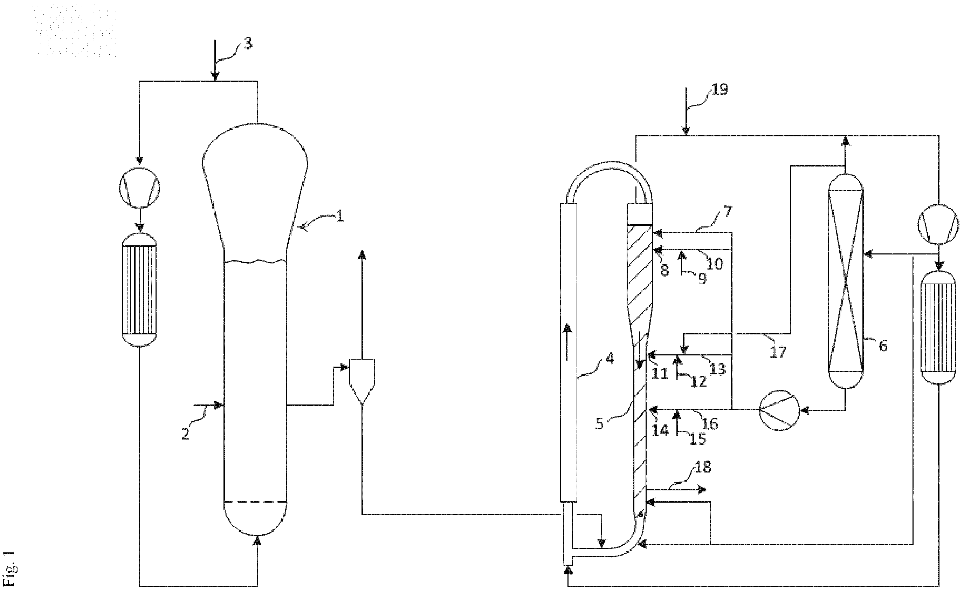

A polyethylene was prepared in a cascade of a fluidized-bed reactor and a multizone circulating reactor having two interconnected reaction zones as shown in Figure 1.
For carrying out the polymerization, 9.1 g/h of the solid catalyst prepared as described above were fed using 1.2 kg/h of liquid propane to a first stirred precontacting vessel, into which also triisobuthyllaluminum (TIBA), diethylaluminumchloride (DEAC) were dosed. The weight ratio between trisiobutylaluminum and diethylaluminumchloride was 7:1. The ratio between aluminum alkyls to the Ziegler catalyst was 5:1. The first precontacting vessel was kept at 50°C with an average residence time of 90 minutes. The catalyst suspension of the first precontacting vessel was continuously transferred to a second stirred precontacting vessel, which was operated with an average residence time of 90 minutes and kept also at 50°C. The catalyst suspension was then transferred continuously to fluidized-bed reactor (FBR) (1) via line (2).
In fluidized-bed reactor (1), ethylene was polymerized in the presence of propane as inert diluent using hydrogen as molecular weight regulator. 51 kg/h of ethylene, 62 g/h of hydrogen and 12 kg/h of propane were fed to fluidized-bed reactor (1) via line 3. No comonomer was added. The polymerization was carried out at a temperature of 80°C and a pressure of 3.0 MPa. The selected feed rates resulted in an ethylene concentration in the reactor of 8.5 vol.-% and a molar ratio of hydrogen/ethylene in the reactor of 0.8.
The polyethylene obtained in fluidized-bed reactor (1) had a MIE of 2.5 g/10 min and a density of 0.959 g/cm³.
The polyethylene obtained in fluidized-bed reactor (1) was continuously transferred to multizone circulating reactor (MZCR), which was operated at a pressure of 2.6 MPa and a temperature of 80°C measured at the gas exit from reactor. The riser (5) has an internal diameter of 200 mm and a length of 19 m. The downcomer (6) has a total length of 18 m, an upper part of 5 m with an internal diameter of 300 mm and a lower part of 13 m with an internal diameter of 150 mm. In order to broaden the molecular weight distribution of the final ethylene polymer, the second reactor was operated by establishing different conditions of monomers and hydrogen concentration within the riser and the downcomer. This is achieved by feeding via line 7, 330 kg/h of a liquid stream (liquid barrier) into the upper part of the downcomer. Said liquid stream has a composition different from that of the gas mixture present in the riser. Said different concentrations of monomers and hydrogen within the riser, the downcomer of the second reactor and the composition of the liquid barrier are indicated in Table 1. The barrier stream 7 comes from a distillation column (6). The monomers to the downcomer were fed in 3 positions. In dosing point 1 (8), located just below the barrier, 25 kg/h of liquid condensate (10), 10 kg/h of ethylene (9) and 70 g/h of 1-hexene (9) were introduced. In dosing point 2 (11), located 2.3 meters below dosing point 1, 15 kg/h of liquid condensate (13) and 6 kg/h of ethylene (12) were introduced. To lower the molecular weight of the bottom part of the downcomer, 2 kg/h of gas from the top of the distillation column (6) were dosed to dosing point 2 (11) via line 17. In dosing point 3 (14), located 4,0 meters below dosing point 2, 15 kg/h of liquid condensate (16) and 6 kg/h of ethylene (15) were dosed. 5 kg/h of propane, 31.1 kg/h of ethylene and 28 g/h of hydrogen were fed through line 19 into the recycling system.

The final polymer was discontinuously discharged via line 18.

The polymerization process in the second reactor produced relatively high molecular weight polyethylene fractions. In Table 1 the properties of the final product are specified. It can be seen that the product has a high swell ratio and high Impact.

The first reactor produced around 48 % by weight (split wt %) of the total amount of the final polyethylene resin produced by both first and second reactors.

The obtained polyethylene polymer had a final MIF of 2.8 g/10 min. The obtained density was 0.953 g/cm$^3$.

The comonomer (hexene-1) amount was of about 0.05% by weight.

Comparative Example 1

The polymer of this comparative example is a polyethylene composition produced in gas phase with a chromium-containing catalyst and sold with trademark Novapol HW-B-355A by Nova.

Table 1

|  | Ex. 1 | Comp. 1 |
|---|---|---|
| Operative conditions first reactor |  |  |
| $H_2/C_2H_4$ Molar ratio | 0.8 | - |
| $C_2H_4$% | 8.2 | - |
| Density of A) (g/cm$^3$) | 0.959 |  |
| MIE [2.16 kg] of A) (g/10 min.) | 2.5 |  |
| Split (wt.%) | 48.5 | - |
|  |  |  |
| Operative conditions second reactor |  |  |
| $H_2/C_2H_4$ Molar ratio riser | 0.27 | - |
| $C_2H_4$% riser | 10.8 | - |
| $C_6H_{12}$ %riser | 0.06 | - |
| $H_2/C_2H_4$ Molar ratio downcomer (below dosing point 1) | 0.007 |  |
| $C_2H_4$% downcomer (below dosing point 1) | 4.6 | - |
| $C_6H_{12}$ % downcomer (below dosing point 1) | 0.04 | - |
| $H_2/C_2H_4$ Molar ratio downcomer (below dosing point 3) | 0.026 |  |
| $C_2H_4$% downcomer (below dosing point 3) | 3.9 | - |
| $C_6H_{12}$ % downcomer (below dosing point 3) | 0.03 | - |

(continued)

|  | Ex. 1 | Comp. 1 |
|---|---|---|
| $H_2/C_2H_4$ Molar ratio barrier | 0.004 | - |
| $C_2H_4$% barrier | 7.1 | - |
| $C_6H_{12}$ % barrier | 0.09 | - |
|  |  |  |
| Final Polymer properties |  |  |
| MIF [21.6 kg] (g/10 min.) | 2.5 | 3.1 |
| MI10 [10 kg] (g/10 min.) | 0.39 | 0.42 |
| MIF/MI10 | 6.5 | 7.5 |
| Density (g/cm$^3$) | 0.953 | 0.954 |
| Swell ratio (%) | 196 | 192 |
| Mw (g/mol) | 516946 | 474671 |
| Mz (g/mol) | 2925200 | 5292680 |
| Mw/Mn | 61.5 | 35.4 |
| LCBI | 0.70 | > 0.98 |
| Comonomer content IR (% by weight) | 0.05% | <0.8 |
| $\eta_{0.02}$ | 428146 | 402039 |
| $(\eta_{0.02}/1000)$/LCBI | 612 | < 410 |
| aTN -30°C (kJ/m$^2$) | 298 | 152 |
| FNCT* 4 MPa/80°C (hours) | 10 | 8 |
| FNCT* 9 MPa/50°C (hours) | 22 | 13 |
| HMW COPO Index | 3.4 | 4.4 |
| ET | 127 | 3180 |
| Notes: $C_2H_4$ = ethylene; $C_6H_{12}$ = hexene; *aqueous solution of 2% Arkopal N100 | | |

**Claims**

1. A polyethylene composition having the following features:

   1) density from 0.945 to 0.958 g/cm$^3$, preferably from 0.948 to 0.955 g/cm$^3$, determined according to ISO 1183 at 23°C;
   2) ratio MIF/MI10 from 2 to 10, in particular from 4 to 8, where MIF is the melt flow index at 190°C with a load of 21.60 kg, and MI10 is the melt flow index at 190°C with a load of 10 kg, both determined according to ISO 1133;
   3) $\eta_{0.02}$ from 200,000 to 800,000 Pa.s, preferably from 200,000 to 600,000 Pa.s, wherein $\eta_{0.02}$ is the complex shear viscosity at an angular frequency of 0.02 rad/s, measured with dynamic oscillatory shear in a plate-plate rotational rheometer at a temperature of 190°C;
   4) long-chain branching index, LCBI, at a molecular weight of 1,000,000 g/mol., equal to or lower than 0.80, preferably lower than 0.75, wherein LCBI is the ratio of the measured mean-square radius of gyration $R_g$, measured by GPC-MALLS, to the mean-square radius of gyration for a linear PE having the same molecular weight;
   5) ratio $(\eta_{0.02}/1000)$/ LCBI, which is between $\eta_{0.02}$ divided by 1000 and LCBI, equal to or greater than 350.

2. The polyethylene composition of claim 1, consisting of or comprising one or more ethylene copolymers.

3. The polyethylene composition of claim 2, wherein the comonomer or comonomers present in the ethylene copolymers are selected from olefins having formula $CH_2=CHR$ wherein R is an alkyl radical, linear or branched, having from 1 to 10 carbon atoms.

4. The polyethylene composition of claims 1 or 2, obtainable by using a Ziegler-Natta polymerization catalyst.

5. The polyethylene composition of claim 4, wherein the Ziegler-Natta polymerization catalyst comprises the product of reaction of:

A) a solid catalyst component comprising Ti, Mg, chlorine and one internal electron donor ED selected from esters of aliphatic monocarboxylic acids (EAA) and another internal donor $ED^I$ selected from cyclic ethers (CE) in an amount such that the EAA/CE molar ratio ranges from 0.02 to less than 20;
B) an organo-Al compound; and optionally
C) an external electron donor compound.

6. The polyethylene composition of claim 1, having at least one of the following additional features:

- Mz from 1,500,000 to 8,000,000 g/mol, preferably from 2,500,000 to 4,500,000 g/mol;
- MIF from 0.5 to 10 g/10min., in particular from 1 to 8 g/10min.;
- comonomer content equal to or less than 2% by weight, with respect to the total weight of the composition;
- HMWcopo index from 1 to 15;

wherein the HMWcopo index is determined according to the following formula:

$$HMWcopo = (\eta_{0.02} \text{ x } t_{maxDSC})/(10^{\wedge}5)$$

where tmaxDSC is the time, in minutes, required to reach the maximum value of heat flow (in mW) of crystallization (time at which the maximum crystallization rate is achieved, equivalent to the t1/2 crystallization half-time) at a temperature of 124 °C under quiescent conditions, measured in isothermal mode in a differential scanning calorimetry apparatus, DSC;

- ET higher than 30, preferably higher than 40;

wherein ET is calculated from:

$$ET = C_2/G^* \text{at } \tan \delta = C_3$$

wherein:

$$G^* = [(G')^2 + (G'')^2]^{1/2};$$

$$\tan \delta = G''/G';$$

$C_2 = 10^6$ dyn/cm$^2$ and $C_3 = 1.5$
G' = storage-modulus;
G" = loss-modulus;
both G' and G" being measured with dynamic oscillatory shear in a plate-plate rotational rheometer at a temperature of 190°C;
- Mz/Mw*LCBI of lower than 10.

7. The polyethylene composition of claim 1, comprising:

A) 30 - 70% by weight, preferably 40 - 60% by weight of an ethylene homopolymer or copolymer (the homopolymer being preferred) with density equal to or greater than 0.956 g/cm$^3$ and melt flow index MIE at 190°C with a load of 2.16 kg, according to ISO 1133, of 0.5 g/10 min. or higher, preferably of 1 g/10 min. or higher;

B) 30 - 70% by weight. preferably 40 - 60% by weight of an ethylene copolymer having a MIE value lower than the MIE value of A), preferably lower than 0.5 g/10 min.

8. Manufactured articles comprising the polyethylene composition of claim 1.

9. Manufactured articles according to claim 8, in form of blow-molded hollow articles.

10. Manufactured articles according to claim 9, in form of L-Ring Drums or Open Top Drums.

11. Process for preparing the polyethylene composition of claim 1, wherein all the polymerization steps are carried out in the presence of a Ziegler-Natta polymerization catalyst supported on $MgCl_2$.

12. The process of claim 11, comprising the following steps, in any mutual order:

a) polymerizing ethylene, optionally together with one or more comonomers, in a gas-phase reactor in the presence of hydrogen;
b) copolymerizing ethylene with one or more comonomers in another gas-phase reactor in the presence of an amount of hydrogen less than step a);

where in at least one of said gas-phase reactors the growing polymer particles flow upward through a first polymerization zone under fast fluidization or transport conditions, leave said riser and enter a second polymerization zone through which they flow downward under the action of gravity, leave said second polymerization zone and are reintroduced into the first polymerization zone, thus establishing a circulation of polymer between said two polymerization zones

**Patentansprüche**

1. Polyethylenzusammensetzung mit den folgenden Merkmalen:

1) einer Dichte von 0,945 bis 0,958 g/cm$^3$, vorzugsweise von 0,948 bis 0,955 g/cm$^3$, bestimmt gemäß ISO 1183 bei 23 °C;
2) einem Verhältnis MIF/MI10 von 2 bis 10, insbesondere 4 bis 8, wobei MIF der Schmelzflussindex bei 190 °C unter einer Last von 21,60 kg ist, und MI10 der Schmelzflussindex bei 190 °C unter einer Last von 10 kg ist, wobei beide gemäß ISO 1133 bestimmt werden;
3) $\eta_{0,02}$ von 200.000 bis 800.000 Pa·s, vorzugsweise von 200.000 bis 600.000 Pa·s, wobei $\eta_{0,02}$ die komplexe Scherviskosität bei einer Kreisfrequenz von 0,02 rad/s ist, gemessen mit dynamischer oszillierender Scherung in einem Platte-Platte-Rotationsrheometer bei einer Temperatur von 190 °C;
4) einem langkettigen Verzweigungsindex, LCBI, bei einem Molekulargewicht von 1.000.000 g/mol gleich oder kleiner als 0,80, vorzugsweise kleiner als 0,75, wobei LCBI das Verhältnis des gemessenen mittleren quadratischen Trägheitsradius $R_g$, gemessen mittels GPC-MALLS, zu dem mittleren quadratischen Trägheitsradius für ein lineares PE mit demselben Molekulargewicht ist;
5) ein Verhältnis ($\eta_{0,02}$/1000)/LCBI, das zwischen $\eta_{0,02}$, geteilt durch 1000 und LCBI gleich oder größer als 350 liegt.

2. Polyethylenzusammensetzung nach Anspruch 1, die aus einem oder mehreren Ethylencopolymeren besteht oder zusammengesetzt ist.

3. Polyethylenzusammensetzung nach Anspruch 2, wobei das Comonomer oder die Comonomere, das/die in den Ethylencomonomeren vorhanden ist/sind, ausgewählt ist/sind aus Olefinen mit der Formel $CH_2=CHR$, wobei R ein linearer oder verzweigter Alkylrest mit 1 bis 10 Kohlenstoffatomen ist.

4. Polyethylenzusammensetzung nach Anspruch 1 oder 2, die unter Verwendung eines Ziegler-Natta-Polymerisationskatalysators erhältlich ist.

5. Polyethylenzusammensetzung nach Anspruch 4, wobei der Ziegler-Natta-Polymerisationskatalysator das Reaktionsprodukt von Folgenden umfasst:

A) einer festen Katalysatorkomponente, die Ti, Mg, Chlor und einen internen Elektronendonor ED ausgewählt aus Estern von aliphatischen Monocarbonsäuren (EAA) und einen anderen internen Donor ED$^I$ ausgewählt aus cyclischen Ethern (CE) in einer solchen Menge umfasst, dass das Molverhältnis von EAA/CE im Bereich von 0,02 bis kleiner als 20 liegt;
B) einer Organo-Al-Verbindung; und gegebenenfalls
C) einer externen Elektronendonorverbindung.

6. Polyethylenzusammensetzung nach Anspruch 1 mit mindestens einem der folgenden zusätzlichen Merkmale:

   - einer Mz von 1.500.000 bis 8.000.000 g/mol, vorzugsweise von 2.500.000 bis 4.500.000 g/mol;
   - einem MIF von 0,5 bis 10 g/10 min., insbesondere von 1 bis 8 g/10 min.;
   - einem Comonomergehalt gleich oder kleiner als 2 Gew.%, bezogen auf das Gesamtgewicht der Zusammensetzung;
   - einem HMWcopo-Index von 1 bis 15;

wobei der HMWcopo-Index gemäß der folgenden Formel bestimmt wird:

$$HMWcopo = (\eta_{0,02} \times t_{maxDSC})/(10^5)$$

wobei tmaxDSC die Zeit in Minuten ist, die benötigt wird, um den Maximalwert des Wärmeflusses (in mW) der Kristallisation (Zeit, bei der die maximale Kristallisationsrate erreicht wird, entspricht der t1/2 Halbwertszeit der Kristallisation) bei einer Temperatur von 124 °C unter ruhigen Bedingungen zu erreichen, gemessen im isothermen Modus in einem Apparat für Differentialscanningkalorimetrie, DSC;

   - ET größer als 30, vorzugsweise größer als 40;

wobei ET berechnet wird aus:

$$ET = C_2/G^* \text{ bei } \tan \delta = C_3$$

wobei:

$$G^* = [(G')^2 + (G'')^2]^{1/2};$$

$$\tan \delta = G''/G';$$

$C_2 = 10^6$ dyn/cm$^2$ und $C_3 = 1,5$
G' = Speichermodul;
G" = Verlustmodul;

wobei sowohl G' als auch G" unter dynamischer oszillierender Scherung in einem Platte-Platte-Rotationsrheometer bei einer Temperatur von 190 °C gemessen werden;

   - Mz/Mw*LCBI kleiner als 10.

7. Polyethylenzusammensetzung nach Anspruch 1, umfassend:

   A) 30 bis 70 Gew.%, vorzugsweise 40 bis 60 Gew.% eines Ethylenhomopolymers oder -copolymers (wobei das Homopolymer bevorzugt ist) mit einer Dichte gleich oder größer als 0,956 g/cm$^3$ und einem Schmelzflussindex MIE bei 190 °C unter einer Last von 2,16 kg gemäß ISO 1133 von 0,5 g/10 Min oder höher, vorzugsweise 1 g/10 min oder höher;
   B) 30 bis 70 Gew.%, vorzugsweise 40 bis 60 Gew.% eines Ethylencopolymers mit einem MIE-Wert, der unter dem MIE-Wert von A) liegt, vorzugsweise unter 0,5 g/10 min.

8. Fertigungsartikel, umfassend die Polyethylenzusammensetzung nach Anspruch 1.

9. Fertigungsartikel nach Anspruch 8 in Form von blasgeformten hohlen Artikeln.

10. Fertigungsartikel nach Anspruch 9 in Form von L-Ringtrommeln oder oben offenen Trommeln.

11. Verfahren zur Herstellung der Polyethylenzusammensetzung nach Anspruch 1, wobei alle der Polymerisationsschritte in Gegenwart eines auf $MgCl_2$ geträgerten Ziegler-Natta-Polymerisationskatalysators durchgeführt werden.

12. Verfahren nach Anspruch 11, umfassend die folgenden Schritte in jeder Reihenfolge zueinander:

a) Polymerisieren von Ethylen, gegebenenfalls zusammen mit einem oder mehreren Comonomeren, in einem Gasphasenreaktor in Gegenwart von Wasserstoff;
b) Copolymerisieren von Ethylen mit einem oder mehreren Comonomeren in einem anderen Gasphasenreaktor in Gegenwart einer Menge an Wasserstoff, die kleiner als in Schritt a) ist;

wobei in mindestens einem der Gasphasenreaktoren die wachsenden Polymerpartikel durch eine erste Polymerisationszone unter raschen Verwirbelungs- oder Transportbedingungen aufwärts fließen, das Steigrohr verlassen und in eine zweite Polymerisationszone eintreten, durch die hindurch sie unter Einwirkung der Schwerkraft abwärts fließen, die zweite Polymerisationszone verlassen und erneut in die erste Polymerisationszone eingebracht werden, wodurch eine Zirkulation von Polymer zwischen den beiden Polymerisationszonen eingerichtet wird.

**Revendications**

1. Composition de polyéthylène présentant les caractéristiques suivantes :

1) densité de 0,945 à 0,958 g/ $cm^3$, préférablement de 0,948 à 0,955 / $cm^3$, déterminée selon la norme ISO 1183 à 23 °C ;
2) rapport MIF/MI10 de 2 à 10, en particulier de 4 à 8, MIF étant l'indice de fluidité à chaud à 190 °C sous une charge de 21,60 kg et MI10 étant l'indice de fluidité à chaud à 190 °C sous une charge de 10 kg, tous deux déterminés selon la norme ISO 1133 ;
3) $\eta_{0,02}$ de 200.000 à 800.000 Pa.s, préférablement de 200.000 à 600.000 Pa.s, $\eta_{0,02}$ étant la viscosité de cisaillement complexe à une fréquence angulaire de 0,02 rad/s, mesurée sous un cisaillement oscillatoire dynamique dans un rhéomètre rotatif à plateaux parallèles à une température de 190 °C ;
4) indice de ramification à longue chaîne, LCBI (long-chain branching index), à un poids moléculaire de 1.000.000 g/mole, égal ou inférieur à 0,80, préférablement inférieur à 0,75, LCBI étant le rapport du rayon de giration quadratique moyen mesuré $R_g$, mesuré par GPC-MALLS (chromatographie par perméation de gel/diffusion de lumière multi-angle), au rayon de giration quadratique moyen pour un PE linéaire présentant le même poids moléculaire ;
5) rapport ($\eta_{0,02}$/1000)/LCBI, qui est le rapport entre $\eta_{0,02}$ divisé par 1000 et LCBI, égal ou supérieur à 350.

2. Composition de polyéthylène selon la revendication 1, constituée par ou comprenant un ou plusieurs copolymères d'éthylène.

3. Composition de polyéthylène selon la revendication 2, le comonomère ou les comonomères présents dans les copolymères d'éthylène étant choisis parmi les oléfines présentant la formule $CH_2$=CHR dans laquelle R représente un radical alkyle, linéaire ou ramifié, comprenant 1 à 10 atomes de carbone.

4. Composition de polyéthylène selon les revendications 1 ou 2, pouvant être obtenue à l'aide d'un catalyseur de polymérisation Ziegler-Natta.

5. Composition de polyéthylène selon la revendication 4, le catalyseur de polymérisation Ziegler-Natta comprenant le produit de réaction de :

A) un constituant catalytique solide comprenant Ti, Mg, chlore et un donneur d'électrons interne ED choisi parmi les esters d'acides monocarboxyliques aliphatiques (EAA) et un autre donneur interne ED[I] choisi parmi les éthers cycliques (CE) en une quantité telle que le rapport molaire EAA/CE est situé dans la plage de 0,02 à moins de 20 ;
B) un composé d'organo-Al ; et éventuellement
C) un composé donneur d'électrons externe.

**6.** Composition de polyéthylène selon la revendication 1, présentant au moins l'une des caractéristiques supplémentaires suivantes :

- Mz de 1.500.000 à 8.000.000 g/mole, préférablement de 2.500.000 à 4.500.000 g/mole ;
- MIF de 0,5 à 10 g/10 min, en particulier de 1 à 8 g/10 min ;
- teneur en comonomère égale ou inférieure à 2 % en poids, par rapport au poids total de la composition ;
- indice HMWcopo de 1 à 15 ;

l'indice HMWcopo étant déterminé selon la formule suivante :

$$HMWcopo = (\eta_{0,02} \times t_{maxDSC})/(10^5)$$

où tmaxDSC est le temps, en minutes, requis pour atteindre la valeur maximale de flux thermique (en mW) de cristallisation (temps auquel le taux de cristallisation maximal est obtenu, équivalent au demi-temps de cristallisation t1/2) à une température de 124 °C dans des conditions de repos, mesuré en mode isotherme dans un appareil de calorimétrie différentielle à balayage, DSC ;

- ET supérieur à 30, préférablement supérieur à 40 ;

où ET est calculé à partir de :

$$ET = C_2/G^* \text{ à } \tan \delta = C_3$$

où :

$$G^* = [(G')^2 + (G'')^2]^{1/2} ;$$

$$\tan \delta = G''/G' ;$$

$C_2 = 10^6$ dyn/cm$^2$ et $C_3 = 1,5$
G' = module de conservation ;
G" = module de perte ;

à la fois G' et G" étant mesurés sous un cisaillement oscillatoire dynamique dans un rhéomètre rotatif à plateaux parallèles à une température de 190 °C ;

- Mz/Mw*LCBI inférieur à 10.

**7.** Composition de polyéthylène selon la revendication 1, comprenant :

A) 30 à 70 % en poids, préférablement 40 à 60 % en poids d'un homopolymère ou copolymère d'éthylène (l'homopolymère étant préféré) présentant une densité égale ou supérieure à 0,956 g/cm$^3$ et un indice de fluidité à chaud MIE à 190 °C sous une charge de 2,16 kg, selon la norme ISO 1133, de 0,5 g/10 min ou plus, préférablement de 1 g/10 min ou plus ;
B) 30 à 70 % en poids, préférablement, 40 à 60 % en poids d'un copolymère d'éthylène présentant une valeur de MIE inférieure à la valeur de MIE de A), préférablement inférieure à 0,5 g/10 min.

**8.** Articles fabriqués comprenant la composition de polyéthylène selon la revendication 1.

**9.** Articles fabriqués selon la revendication 8, sous la forme d'articles creux moulés par soufflage.

**10.** Articles fabriqués selon la revendication 9, sous la forme de tambours à joints en L ou de tambours à dessus ouvert.

**11.** Procédé de préparation de la composition de polyéthylène selon la revendication 1, toutes les étapes de polymérisation étant réalisées en présence d'un catalyseur de polymérisation Ziegler-Natta supporté sur MgCl$_2$.

**12.** Procédé selon la revendication 11, comprenant les étapes suivantes, dans n'importe quel ordre mutuel :

a) polymérisation d'éthylène, éventuellement conjointement avec un ou plusieurs comonomères, dans un réacteur à phase gazeuse en présence d'hydrogène ;
b) copolymérisation d'éthylène avec un ou plusieurs comonomères dans un autre réacteur à phase gazeuse en présence d'une quantité d'hydrogène inférieure à celle de l'étape a) ;

où, dans au moins un desdits réacteurs à phase gazeuse, les particules polymères en croissance s'écoulent vers le haut à travers une première zone de polymérisation dans des conditions de fluidisation ou de transport rapide, quittent ladite colonne montante et pénètrent dans une deuxième zone de polymérisation à travers laquelle elles s'écoulent vers le bas sous l'action de la gravité, quittent ladite deuxième zone de polymérisation et sont réintroduites dans la première zone de polymérisation, établissant ainsi une circulation de polymère entre lesdites deux zones de polymérisation

Fig. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6201078 B
- WO 2014134193 A1
- US 4469648 A
- US 4399054 A
- WO 9844009 A
- US 5100849 A
- US 4829034 A
- EP 395083 A
- WO 2005019280 A

### Non-patent literature cited in the description

- **D. GELDART.** Gas Fluidisation Technology. J. Wiley & Sons Ltd, 1986, 155
- **R. SHROFF ; H. MAVRIDIS.** New Measures of Polydispersity from Rheological Data on Polymer Melts. *J. Applied Polymer Science,* 1995, vol. 57, 1605-1626
- **BENOIT H. ; REMPP P. ; GRUBISIC Z.** *J. Polymer Sci.,* 1967, vol. 5, 753
- **ZIMM BH ; STOCKMAYER WH.** The Dimensions of Chain Molecules Containing Branches and Rings. *The Journal of Chemical Physics,* 1949, vol. 17, 1301
- **ZIMM BH ; STOCKMAYER WH.** The dimensions of chain molecules containing branches and rings. *J Chem Phys,* 1949, vol. 17
- **RUBINSTEIN M. ; COLBY RH.** Polymer Physics. Oxford University Press, 2003
- **M. FLEISSNER.** *Kunststoffe,* 1987, vol. 77, 45